# EUROPEAN PATENT SPECIFICATION

(11) **EP 2 644 991 B1**
(45) Date of publication and mention of the grant of the patent: **17.06.2020**
(21) Application number: 12382544.0
(22) Date of filing: 28.12.2012
(51) Int. Cl.: F22B 1/18, F22B 37/20, F28D 1/02, F22D 1/02, F02G 5/02, F23J 11/00, F23J 15/06, F28F 9/00, F28D 21/00

(54) **Heat recovery device for cogeneration chimney**
Wärmewiedergewinnungsvorrichtung für einen Heizkraftkamin
Dispositif de récupération de chaleur pour cheminée de cogénération

(30) Priority: 30.03.2012 ES 201230348 U
(43) Date of publication of application: 02.10.2013
(73) Proprietor: Seat, S.A., 08760 Martorell - Barcelona (ES)
(72) Inventor: Ros Pau, Antonio, 08760 Barcelona (ES); Lopez Blanco, Enrique, 08760 Barcelona (ES); Juberias Bertolin, Raul Alberto, 08760 Barcelona (ES)
(74) Representative: Elzaburu S.L.P.

(56) References cited:
- EP-A2- 2 351 812
- WO-A1-90/14556
- CN-U- 201 593 929
- CN-U- 201 650 423
- JP-A- 2000 161 013

## Description

### Field of the invention

The present invention falls within the field of elements used for exploiting and recovering heat. Specifically it is directed to a heat recovery device.

### Background

In cogeneration plants, the recovery boilers emit through the chimney a 50 Kg/s gas flow at 200 °C, which generates a heat loss that is not recovered and that causes a decrease in the global performance thereof.

Nowadays, there are different types of heat recovery devices, like those installed in household chimneys with air-water heat exchangers or in combined cycle power plants, wherein exchangers are used to produce vapor in the chimneys. However, in those devices, it is customary to place a second vessel in order to work at two different pressures and even with an additional vapor turbine.

The cogeneration plants developed at the beginning of the 90 are based on one single pressure level and present very high gas outlet temperatures in the chimney when they operate with little or no combustion.

It is also know from the state of the art the patent document WO9014556, which discloses an energy conservation apparatus to recover the waste energy in various industrial processes. The general assembly of the single stage "Economizer" heat transfer unit is provided with tube and twisted baffle tube and twisted baffle, tube plates which are welded to heat transfer tubes. The exhaust flue gas is passed through the tubes to heat the water or chemicals to 85 DEG -90 DEG C, the pre-heated or cold water is directed to solenoid valve, check valve and pipe. When the water is heated to set up temperature control by thermostatic device, solenoid valve with check valve discharges the hot water into the storage tank. Pressure vessel is provided with safety valve which relieves the excess pressure which is discharged through the storage tank. To control flue gas temperature into heat transfer unit, thermocouples are fitted. Variable speed fan with impeller intakes the exhaust heat (flue gas) from the boiler which increases or decreases the excess air and provides high efficiency heat transfer which maintains the pressure drops into boiler combustion chamber.

With these known exchangers, when installed in chimneys of cogeneration plants, there is the risk that if the gases temperature falls below 100 °C, the moist gases condensate in the chimney in the form of sulfides, which causes corrosion.

### Description of the invention

The invention relates to a heat recovery device for chimneys of boilers in cogeneration plants, which, without incorporating any structural change in the vapor generator, obtains the generation of over-heated water for heating purposes or for those processes requiring a temperature between 130 and 170 °C, thus considerably increasing the efficiency of the cogeneration system.

The heat recovery device of the invention, as solely defined by appended independent claim 1, inter alia includes:
- a central body, which comprises a water inlet pipe and a water outlet pipe,
- a funnel for connecting it to the chimney, arranged on the lower portion of the body,
- a funnel for letting out the recovered air, arranged on the upper portion of the body,
- expansion joints at each of the funnels, and
- an auxiliary structure for supporting its weight.
this makes it possible to install it in the existing chimneys where, due to space or *budgetary* problems, an additional heat recovery phase cannot be installed.

This heat recovery device controls the temperature drops by means of a control valve, as defined in appended independent claim 1, which when the water temperature in the outlet pipe reaches a pre-established value, lowers the water flow inside the recovery device, which, in turn, increases again the gases temperature.

Given the condensation risk, the chimney has also to be heat insulated to prevent drops in the gas temperatures on cold days.

The recovery device operation is as follows:
The exchanger, located in the chimney exploits the gases going out through it at 200 °C because of the residual heat that is not used inside the boiler, which are produced during the Gas Turbine and the Burners combustion, heating the water that circulates inside the exchanger, the hot water is conveyed by means of pumps to the heating access points or technological processes requiring it. Once the energy of the gases going out through the chimney has been recovered, the temperature thereof falls to 120 °C.

This way, it is possible to decrease the temperature of the fumes from 200 °C to 120 °C recovering this thermal power and generating 3800 kW of thermal energy.

Aside from the energy benefits, an improvement in the temperature of the emissions to the atmosphere is achieved.

### Brief description of the drawings

Next, a set of drawings will be very briefly described for a better comprehension of the invention and that are expressly related to an embodiment of said invention, which is presented by way of a non-limiting example thereof.
Figure 1 shows a side view of the recovery device
Figure 2 shows a front view of the recovery device

In the aforementioned figures a series of references, which correspond to the elements indicated below, are identified, including but not limited to:
1.- upper funnel
2.- lower funnel
3.- central body
4.- water inlet pipe
5.- water outlet pipe
6.- auxiliary structure
7.- expansion joints
8.- valve for regulating temperature.

### Detailed description of an embodiment

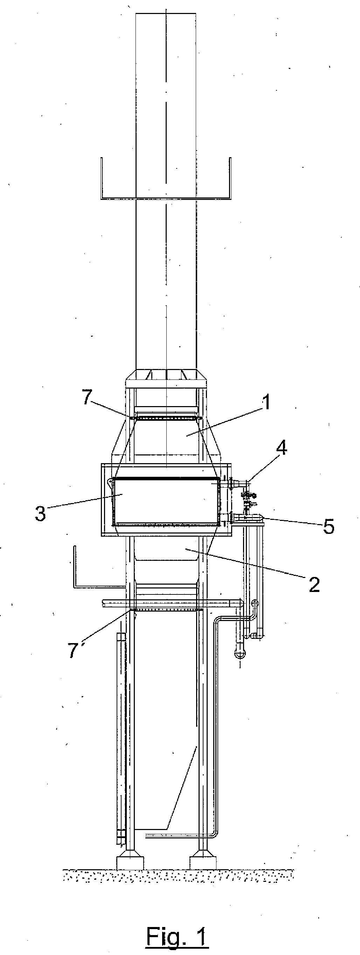

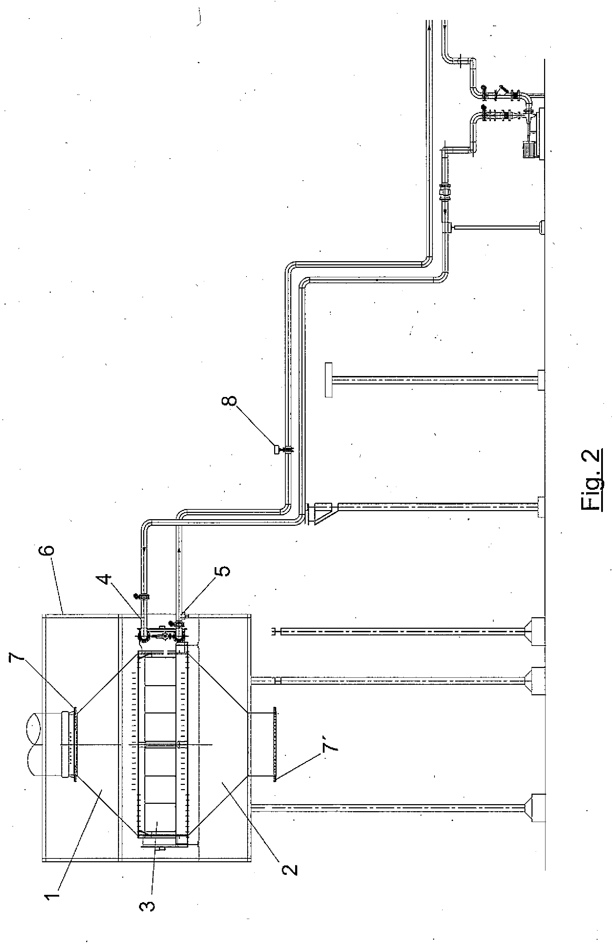

As it can be seen in figures 1-2 the recovery device includes:
- a central body (3), which comprises an internal conveying pipeline having a water inlet (4) and a water outlet (5),
- a lower funnel (2) for connecting the chimney, arranged on the lower portion of the body (3),
- an upper funnel (1) for letting out the recovered air, arranged on the upper portion of the body (3),
- expansion joints (7, 7') arranged on the upper (1) and lower (2) funnels, and
- an auxiliary support structure (6),
- a valve (8) for regulating the water inlet flow, and
- a sensor for the water temperature within the conveying pipeline,
in such a way that when the temperature sensor detects a given temperature below a pre-established temperature, the valve closes, thus decreasing the water circulating inside the recovery device, which generates an increase in the temperature of the gases.

The entire recovery device is covered with an external heat insulation.

## Claims

1. Heat recovery device for cogeneration chimneys wherein said heat recovery device includes:
- a central body (3), which comprises an internal conveying pipeline having a water inlet pipe (4) and a water outlet pipe (5),
- a lower funnel (2) for connecting it to the chimney arranged on the lower portion of the body (3),
- an upper funnel (1) for letting out the recovered air, arranged on the upper portion of the body (3),
- expansion joints (7, 7') arranged on the upper (1) and lower (2) funnels,
- an auxiliary support structure (6),
- a valve (8) for regulating the inlet water flow, and
- a sensor for the water temperature within the conveying pipeline,
**characterized in that** the heat recovery device comprises a controller configured to control the temperature drops by means of the valve (8), which when the water temperature in the outlet pipe reaches a pre-established value, lowers the water flow inside the recovery device.

2. Heat recovery device according to claim 1 **characterized in that** the central body (3) and the lower (2) and upper (1) funnels are covered by an external heat insulating material.

## Patentansprüche

1. Wärmewiedergewinnungsvorrichtung für Heizkraftkamine, wobei die Wärmewiedergewinnungsvorrichtung Folgendes beinhaltet:
- einen zentralen Körper (3), der eine Förderleitung mit einem Wassereinlaufrohr (4) und einem Wasserablaufrohr (5) umfasst,
- einen unteren Trichter (2) zum Anschließen an den Kamin, der auf dem unteren Teil des Körpers (3) angeordnet ist,
- einen oberen Trichter (1) zum Ablassen der wiedergewonnenen Luft, der auf dem oberen Teil des Körpers (3) angeordnet ist,
- Dehnungsfugen (7, 7'), die auf dem oberen (1) und dem unteren (2) Trichter angeordnet sind,
- eine zusätzliche Stützstruktur (6),
- ein Ventil (8) zur Regulierung des einlaufenden Wasserflusses und
- einen Sensor für die Wassertemperatur innerhalb der Förderleitung,
**dadurch gekennzeichnet, dass** die Wärmewiedergewinnungsvorrichtung eine Steuereinheit umfasst, die ausgestaltet ist, um die Temperaturabfälle mittels des Ventils (8) zu steuern, das, wenn die Wassertemperatur im Ablaufrohr einen vorgegebenen Wert erreicht, den Wasserfluss im Innern der Wiedergewinnungsvorrichtung verringert.

2. Wärmewiedergewinnungsvorrichtung nach Anspruch 1, **dadurch gekennzeichnet, dass** der zentrale Körper (3) und der untere (2) und obere (1) Trichter mit einem externen wärmedämmenden Material bedeckt sind.

## Revendications

1. Dispositif de récupération de chaleur pour cheminées de cogénération dans lequel ledit dispositif de récupération de chaleur inclut :
- un corps central (3), qui comprend une tuyauterie interne servant à la mutation du liquide qui possède un tuyau d'arrivée d'eau (4) et un tuyau de sortie d'eau (5),
- un entonnoir inférieur (2) pour le relier à la cheminée disposé sur la partie inférieure du corps (3),
- un entonnoir supérieur (1) pour laisser sortir l'air récupéré, disposé sur la partie supérieure du corps (3),
- des joints de dilatation (7, 7') disposés sur les entonnoirs supérieur (1) et inférieur (2),
- une structure de support auxiliaire (6),
- une vanne (8) pour régler le débit d'arrivée d'eau, et
- un capteur pour la température de l'eau à l'intérieur de la tuyauterie servant à la mutation du liquide,
**caractérisé en ce que** le dispositif de récupération de chaleur comprend un régulateur configuré pour réguler les baisses de température à l'aide de la vanne (8), qui lorsque la température de l'eau dans le tuyau de sortie atteint une valeur préétablie, réduit le débit de l'eau à l'intérieur du dispositif de récupération.

2. Dispositif de récupération de chaleur selon la revendication 1 **caractérisé en ce que** le corps central (3) et les entonnoirs inférieur (2) et supérieur (1) sont recouverts d'un matériau d'isolation thermique externe.
